# FASCICULE DE BREVET EUROPEEN

(11) **EP 1 518 770 B1**
(45) Date de publication et mention de la délivrance du brevet: **14.06.2006**
(21) Numéro de dépôt: 04021912.3
(22) Date de dépôt: 15.09.2004
(51) Int. Cl.: B60T 11/16

(54) **Maitre-cylindre à sécurité accrue**
Hauptzylinder mit erhöhertem Sicherheit
Main cylinder with enhanced security

(30) Priorité: 23.09.2003 FR 0311167
(43) Date de publication de la demande: 30.03.2005
(73) Titulaire: ROBERT BOSCH GMBH, 70442 Stuttgart (DE)
(72) Inventeur: Pujol, Hervé, 93310 Le Pre St Gervais (FR); Aquino, Serge, 93110 Rosny Sous Bois (FR); Noblet, Marc, 75014 Paris (FR); Anderson, Chris, 75002 Paris (FR); Fausten, Thierry, 93290 Tremblay en France (FR)
(74) Mandataire: Hurwic, Aleksander Wiktor

(56) Documents cités:
- DE-A- 3 433 990
- FR-A- 2 817 190
- US-A- 4 885 910

## Description

La présente invention se rapporte principalement à un maître cylindre à sécurité accrue et à un piston pour un tel maître cylindre, en particulier un maître cylindre comportant un piston réalisé par moulage par exemple d'un matériau plastique ou d'aluminium.

Le document DE 34 33 990 décrit un maître cylindre selon le préambule de la revendication 1.

Dans le document FR 02 817190, est décrit un maître cylindre pour système de freinage comportant des pistons en matériau plastique réalisés par moulage. Chacun des pistons divise un premier et un second circuit hydraulique en une chambre d'alimentation et une chambre de pression, la chambre de pression étant en communication avec la chambre d'alimentation au repos par un canal pratiqué dans le piston et obturé lors d'une action de freinage par un obturateur.

L'obturateur et le canal forment un clapet, ledit clapet étant actionné par le déplacement du piston provoqué par un effort appliqué à la pédale de frein. La chambre d'alimentation est raccordée à un réservoir de liquide de frein et la chambre de pression est reliée à des freins disposés au niveau des roues du véhicule automobile. Le clapet est ouvert en position repos au moyen d'un élément d'appui contre lequel l'obturateur vient en appui et se soulève alors d'un siège de clapet formé autour du canal. Dans le circuit primaire, l'élément d'appui est une goupille flottante qui se déplace avec le mouvement du piston. Par contre, dans le circuit hydraulique secondaire, la goupille est fixe et montée dans le corps du maître cylindre.

Lors d'une course maximale du piston secondaire, son extrémité avant, c'est à dire opposée à la pédale de frein, vient en butée contre le fond du corps du maître cylindre. On s'est aperçu que l'appui de l'extrémité avant du piston secondaire contre le fond du corps du maître cylindre pouvait provoquer la détérioration de l'extrémité avant du piston secondaire ce qui était néfaste au bon fonctionnement du maître cylindre.

En effet, le matériau plastique utilisé pour réaliser par moulage le piston secondaire en particulier, n'est pas apte à supporter des chocs répétés. Cependant, l'avantage économique que celui-ci apporte du fait de la simplicité de réalisation du piston par moulage, et du gain de poids que cela apporte pour l'ensemble du maître cylindre et donc pour l'ensemble du système de freinage, est très important. Il est par conséquent souhaitable de pouvoir continuer à utiliser des pistons en matière plastique dans les maître cylindres.

Il serait envisageable de réaliser des pistons en matière plastique capables de supporter le choc répété contre le corps du maître cylindre en employant des matériaux plastique à grande résistance mécanique. Cependant ces matériaux plastiques sont d'un prix de revient relativement élevé et beaucoup plus difficiles à mettre en oeuvre, ce qui supprimerait une grande part de l'effet avantageux de l'emploi du matériau plastique pour réaliser les pistons du maître cylindre.

C'est par conséquent un but de la présente invention d'offrir un maître cylindre comportant des pistons en matière plastique à sécurité accrue.

C'est également un but de la présente invention d'offrir un maître cylindre comportant des pistons en matière plastique ayant une durée de vie égale aux durées de vie des maîtres cylindre comportant des pistons classiques.

C'est également un but de la présente invention d'offrir un maître cylindre comportant des pistons en matière plastique à faible prix de revient.

Ces buts sont atteints par un maître cylindre pour système de freinage comportant un circuit primaire et un circuit secondaire munis respectivement d'un piston primaire et d'un piston secondaire, chacun des pistons définissant une chambre d'alimentation et une chambre de travail mises en communication au repos par un clapet disposé dans chacun des pistons, les clapets étant ouverts au repos au moyen de goupillés disposées dans le corps du maître cylindre, la goupille du circuit primaire étant montée flottante dans le piston primaire et la goupille du circuit secondaire étant montée fixe dans le corps du maître cylindre, la goupille du circuit secondaire étant montée dans une lumière longitudinale pratiquée dans le piston secondaire de dimensions telles qu'elle empêche l'extrémité avant du piston secondaire de venir en contact avec le fonds du corps du maître cylindre.

En d'autres termes, le piston secondaire vient en appui contre la goupille du circuit secondaire avant de venir en butée contre le fond du maître cylindre.

De plus en plus de véhicules automobiles sont équipés de systèmes de contrôles électroniques de la stabilité permettant une meilleure maîtrise de la trajectoire du véhicule automobile. Ce système met en oeuvre un calculateur recevant des informations de divers capteurs, le calculateur à partir de ces informations détermine la nécessité de corriger la trajectoire du véhicule ou non. Dans le cas où la trajectoire doit être modifiée, lé calculateur commande à une pompe hydraulique d'envoyer du liquide de frein dans les freins pour provoquer le freinage d'une ou plusieurs roues, le liquide de frein étant aspiré dans le réservoir du liquide de frein à travers le maître cylindre. Cependant du fait des forts débits requis pour le fonctionnement de ces systèmes de contrôle électroniques de la stabilité, il est nécessaire d'avoir de grandes sections de passages à travers le maître cylindre et en particulier dans les pistons, en particulier dans le piston secondaire, une des sections caractéristiques étant la section déterminée par la lumière dans laquelle est montée coulissante la goupille.

Par conséquent, il est avantageux de prévoir une lumière de dimensions les plus grandes possible, cependant, afin d'assurer la plus grande tenue au choc du piston du fait du contact de l'extrémité arrière de la lumière avec la goupille, il est également nécessaire de prévoir une forme particulière de la lumière afin de répartir au mieux les efforts appliqués par la goupille contre le piston. Ce but est atteint par une lumière ayant une première partie de dimensions transversales arrière sensiblement égales au diamètre de la goupille afin que celle-ci vienne en appui sur toute la périphérie arrière de la lumière et comporte également une deuxième partie avant de dimensions transversales suffisantes pour permettre le passage du liquide de frein du réservoir au frein lorsque celui ci est aspiré par une pompe hydraulique.

La présente invention a pour avantage d'être de conception très simple, facilement applicable à tout type de maître cylindre à pistons à clapets et utilisable sur les véhicules comportant des systèmes de contrôle électronique de stabilité.

La présente invention a principalement pour objet un maître-cylindre comportant un corps dans lequel est pratiqué un alésage obturé à une extrémité par un fond, au moins un piston monté à coulissement de manière étanche dans l'alésage, une chambre d'alimentation en fluide hydraulique formée dans une lumière longitudinale du piston, une chambre de travail raccordée à des freins, ladite chambre de travail étant raccordé par un passage pratiqué dans le piston à la chambre d'alimentation, un clapet destiné à obturer ledit passage lors d'une phase de freinage, ledit clapet comportant un obturateur et un siège de clapet porté par le piston, ledit obturateur étant en appui au repos contre un élément d'appui monté fixe dans le corps du maître-cylindre, ledit élément d'appui étant monté traversant dans la lumière longitudinale caractérisé en ce que la distance séparant une première extrémité de la lumière éloignée du clapet et une première extrémité de l'élément d'appui éloignée du fond est inférieure à une distance séparant une première extrémité du piston proche du fond et le fond.

La présente invention a également pour objet un maître-cylindre caractérisé en ce que l'élément d'appui est une goupille.

La présente invention a également pour objet un maître-cylindre caractérisé en ce que la première extrémité de la lumière est en forme d'arc de cercle et en ce que l'arc de cercle a un diamètre sensiblement égal au diamètre de la goupille de manière à assurer un répartition uniforme des contraintes appliquées par la goupille sur le piston.

La présente invention a également pour objet un maître-cylindre caractérisé en ce qu'une deuxième extrémité de la lumière proche du fond est de largeur supérieure au diamètre de la première extrémité de la lumière.

La présente invention a également pour objet un maître-cylindre caractérisé en ce que ledit piston est obtenu par moulage.

La présente invention a également pour objet un maître-cylindre caractérisé en ce que le piston est réalisé par moulage de matière plastique.

La présente invention a également pour objet un maître-cylindre caractérisé en ce que le piston est réalisé par moulage de matière phénolique.

La présente invention a également pour objet un maître-cylindre caractérisé en ce que le piston est réalisé par moulage d'un alliage d'aluminium.

La présente invention a également pour objet un maître-cylindre caractérisé en ce que l'obturateur est amené en contact du siège de clapet au moyen d'un ressort monté en compression dans un logement dans lequel débouche le passage entre l'obturateur et une capuche montée à force dans le logement.

La présente invention a également pour objet un maître-cylindre caractérisé en ce que le maître-cylindre est un maître-cylindre tandem comportant un piston primaire et un piston secondaire.

La présente invention a également pour objet un maître-cylindre caractérisé en ce qu'il comporte des ressorts de rappel primaire et secondaire respectivement des pistons primaire et secondaire et en ce que le ressort primaire est monté dans une cage déterminant la charge du ressort, ladite cage étant en appui contre le piston primaire et le piston secondaire.

La présente invention a aussi pour objet un piston pour maître-cylindre comportant une lumière longitudinale destiné à recevoir un élément d'appui traversant le piston caractérisé en ce que la lumière comporte une extrémité d'appui apte à venir en contact de l'élément d'appui.

La présente invention sera mieux comprise à l'aide de la description qui suit et des figures annexées sur lesquelles l'avant et l'arrière correspondent respectivement partie gauche et droite des dessins et pour lesquels
- La figure 1 est une vue en coupe longitudinale d'un maître cylindre selon la présente invention en position repos;
- La figure 2 est une vue en coupe longitudinale d'un piston de maître cylindre selon la présente invention.
- La figure 3 est une vue en coupe transversale d'un piston selon la présente invention.

On entend par positon repos, la position occupé par les pistons du maître-cylindre lorsque aucun effort de freinage n'est appliqué à la pédale de frein.

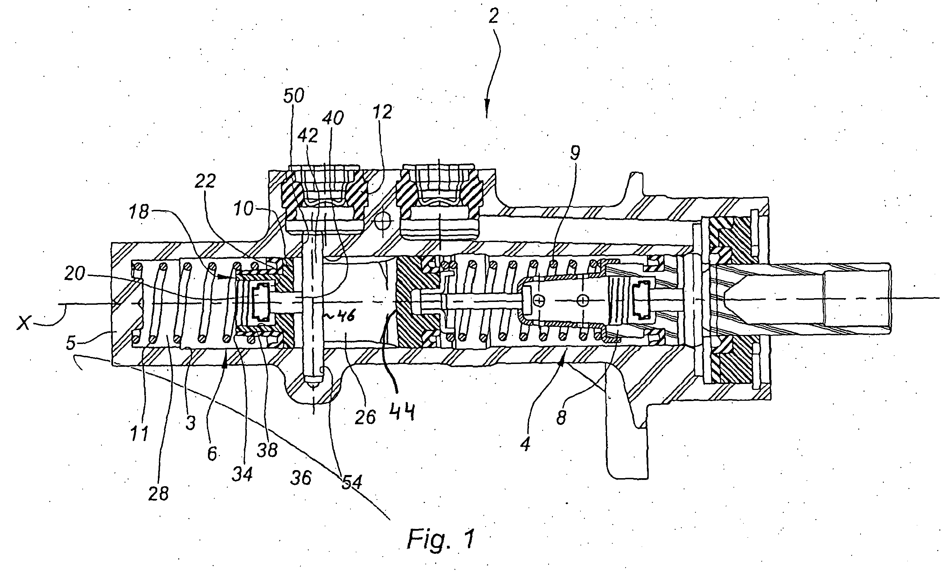

Sur la figure 1 on peut voir un maître cylindre selon la présente invention comportant un corps de maître cylindre 2 d'axe longitudinal X dans lequel est pratiqué un alésage coaxial à l'axe X, ledit alésage 3 étant obturé à une extrémité par un fond 5.. On peut bien entendu prévoir un alésage 3 traversant obturé à une extrémité longitudinale par un bouchon rapporté monté par exemple par vissage ou par collage. Dans l'alésage 3 est monté à coulissement étanche un piston primaire 8 et un piston secondaire 10 définissant respectivement un circuit hydraulique primaire 4 et un circuit hydraulique secondaire 6.

Le maître-cylindre est commandé par une pédale de frein actionnée par un conducteur à partir d'un habitacle de véhicule automobile par l'intermédiaire d'une tige de commande. Un servomoteur d'assistance pneumatique au freinage est communément interposé entre la pédale de frein et le maître-cylindre, et transmet l'effort de freinage et d'assistance au piston primaire par une tige de poussée pénétrant dans une extrémité arrière du piston primaire.

Les pistons primaire et secondaire sont ramenés respectivement en position repos par un ressort de rappel primaire et secondaire 9,11. Le ressort de rappel primaire est monté entre une extrémité arrière du piston secondaire 10 et une extrémité avant du piston primaire 8. De manière avantageuse, la charge du le ressort de rappel primaire est monté dans une cage de dimension longitudinale variable de dimension maximale prédéterminée et fixant la charge du ressort de rappel du piston primaire. La cage est montée en appui contre les pistons primaire et secondaire.

La présente invention s'appliquant avantageusement au circuit secondaire, nous ne décrirons que le circuit hydraulique secondaire, cependant il est bien entendu que la présente invention est susceptible de s'appliquer au piston primaire.

Le circuit hydraulique secondaire 6 comporte une chambre d'alimentation 26 raccordée par des moyens étanches 12 à un réservoir de liquide de frein (non représenté) et une chambre de pression 28 raccordée à des freins disposés au niveau de roues du véhicule automobile. La chambre d'alimentation 26 est délimitée par une lumière longitudinale 30 pratiquée dans le corps du piston 10, et la chambre de pression 28 est délimitée par une extrémité longitudinale avant 34 du piston secondaire et le fond 5. La chambre d'alimentation est en communication avec la chambre de travail par un passage 36 pratiqué dans le piston 10 et obturé par un clapet 18 lors d'une application de freinage. Le clapet 18 comporte quant à lui un siège de clapet 20 porté par le piston et un obturateur 22 ramené élastiquement contre le siège de clapet par un ressort 38. L'obturateur 22 est en appui par l'intermédiaire d'une tige 40 contre un élément d'appui 42 monté fixe dans le corps du maître cylindre et traverse la lumière 32. L'élément d'appui 42 est par exemple une goupille cylindrique d'axe perpendiculaire à l'axe X du corps du maître cylindre et s'étendant de la partie inférieure du corps du maître cylindre vers la partie supérieure du corps du maître cylindre.

Le ressort 38 est avantageusement maintenu dans un logement 37 pratiqué dans le piston et dans lequel débouche le passage 36 au moyen d'une capuche monté à force à une extrémité avant du logement 37. La capuche est ajourée de manière à permettre l'écoulement du liquide de frein de la chambre d'alimentation à la chambre de travail.

Lors d'une action de freinage, le piston primaire coulisse dans le corps du maître cylindre dans la direction de la flèche F, provoquant le coulissement dans le sens de la flèche F du piston secondaire 10, la tige de l'obturateur 22 perd le contact avec la goupille 42, l'obturateur 22 est repoussé par le ressort 38 en direction du siège de clapet, et le clapet se ferme obturant la communication entre la chambre d'alimentation 26 et la chambre de pression 28 permettant alors une montée en pression dans la chambre de pression 28 et dans les freins disposés au niveau des roues. Le niveau de freinage augmente avec le déplacement des pistons primaire et secondaire dans le sens de la flèche et le niveau de freinage maximum est atteint lorsque le piston secondaire vient en contact avec l'extrémité avant de l'alésage 3 du corps du maître cylindre.

Le piston secondaire est avantageusement réalisé par moulage par exemple de matière plastique, par exemple un matériau phénolique ou d'alliage d'aluminium, de manière à ne pas comporter de plan de joints nécessitant un usinage ou un ébavurage. Le moulage du piston est avantageusement réalisé par exemple avec un moule en trois parties, une première partie pour le corps principal de forme cylindrique, une deuxième et une troisième parties pour former les extrémités avant et arrière des pistons et un tiroir en deux parties pour réaliser la lumière. Cependant le contact avec le fond 5 de l'alésage 3 du maître cylindre peut détériorer l'extrémité avant 34 du piston secondaire et provoquer par exemple l'apparition de copeaux, ou de débris de matériaux plastiques, susceptibles de perturber le coulissement du piston en particulier le coulissement étanche du piston et donc la montée en pression dans la chambre de pression 28.

La présente invention permet de résoudre ce problème.

Selon la présente invention, la distance L séparant une extrémité arrière 44 de la lumière 30 à une extrémité arrière 46 de la goupille 42, est inférieure à la distance D séparant l'extrémité avant 32 du piston secondaire du fond 5 de l'alésage 3. Par conséquent, la course maximale du piston secondaire 10 est limitée par le contact entre l'extrémité arrière 44 de la lumière 30 avec l'extrémité arrière 46 de la goupille 42, et non par le contact entre l'extrémité avant 32 du piston secondaire et le fond 5 de l'alésage 3.

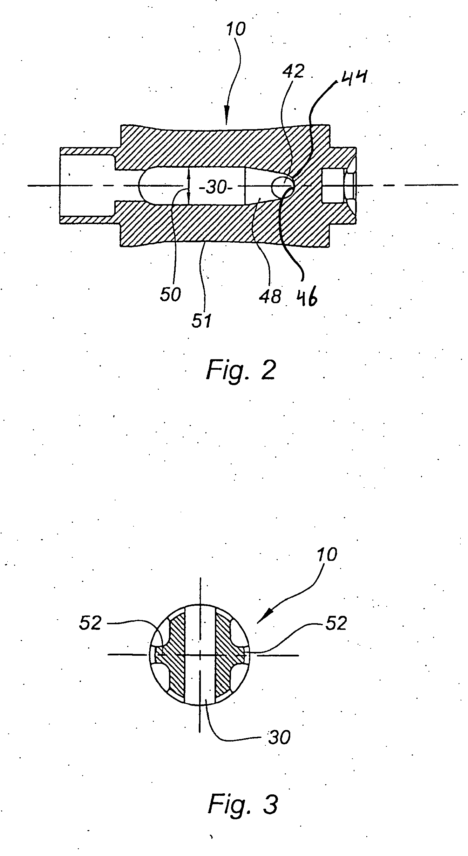

La lumière 30 comporte avantageusement une première partie longitudinale arrière 48 de dimension transversale plus faible et une deuxième partie longitudinale avant de dimension transversale plus grande 50. La première partie 48 et la deuxième partie 50 sont artificiellement délimitées sur la figure 2 par un trait en pointillés. Sur la vue en coupe du piston secondaire représenté sur la figure 2, la première partie 48 comporte une première extrémité longitudinale arrière délimitée par un arc de cercle 52 de diamètre sensiblement égal au diamètre de la goupille 42, et s'étendant vers une seconde extrémité longitudinale avant par un tronc de cône orienté vers l'arrière. La deuxième partie longitudinale avant 50 comporte une première section sensiblement rectangulaire de dimension transversale d plus grande que le diamètre de la goupille 42 et se terminant dans l'exemple représenté vers l'avant par un arc de cercle.

Sur la figure 2, on peut voir en pointillés la goupille 42 dans une position extrême lorsque le piston secondaire a parcouru sa course maximale. On voit alors que le contact entre l'extrémité arrière 44 de la lumière 30 et la périphérie arrière de la goupille 42 sont en contact intime et permettent une répartition des forces appliquées sur le piston 10 par la goupille 42 de manière homogène évitant une concentration de contraintes à des endroits particuliers du piston risquant de détériorer celui-ci.

Il est également prévu d'utiliser un élément d'appui de rigidité supérieure à celle d'un élément d'appui utilisé dans les maîtres-cylindres dont le piston secondaire vient en appui contre le fond du corps du maître-cylindre. Par exemple dans le cas d'une goupille, son diamètre est plus important que celui d'une goupille utilisée dans un maître-cylindre classique.

Le piston comporte avantageusement un périphérie profilée de manière à augmenter le débit d'aspiration en phase d'activation de l'ESP. Par exemple, le piston comporte un rétrécissement 51 situé au niveau de la partie centrale selon la direction axiale de manière à augmenter la section de passage entre le piston et l'alésage 3 et des rainures 52 axiales pour rigidifier le piston.

On a bien réalisé un maître cylindre à sécurité accrue avec un prix de revient relativement faible et un poids réduit, adaptable au système de freinage comportant des systèmes de contrôle électronique de la stabilité.

La présente invention s'applique notamment à l'industrie automobile.

La présente invention s'applique principalement à l'industrie du freinage pour véhicules automobiles et notamment à l'industrie du freinage pour voitures particulières.

## Revendications

1. Maître-cylindre comportant un corps (2) dans lequel est pratiqué un alésage (3) obturé à une extrémité par un fond (5), au moins un piston (8,10) monté à coulissement de manière étanche dans l'alésage, une chambre d'alimentation en fluide hydraulique formée dans une lumière longitudinale (30) du piston, une chambre de travail raccordée à des freins, ladite chambre de travail étant raccordé par un passage (36) pratiqué dans le piston (8,10) à la chambre d'alimentation, un clapet destiné à obturer ledit passage (36) lors d'une phase de freinage, ledit clapet (18) comportant un obturateur (22) et un siège de clapet (20) porté par le piston (8,10), ledit obturateur (22) étant en appui au repos contre un élément d'appui (42) monté fixe dans le corps (3) du maître-cylindre, ledit élément d'appui étant monté traversant dans la lumière longitudinale (30), la distance séparant une première extrémité (44) de la lumière éloignée du clapet (20) et une première extrémité (46) de l'élément d'appui éloignée du fond (5) étant inférieure à une distance séparant une première extrémité (34) du piston proche du fond (5) et le fond (5), l'élément d'appui étant une goupille **caractérisé en ce que** la première extrémité (44) de la lumière (30) est en forme d'arc de cercle et **en ce que** l'arc de cercle a un diamètre sensiblement égal au diamètre de la goupille de manière à assurer un répartition uniforme des contraintes appliquées par la goupille sur le piston (8,10).

2. Maître-cylindre selon la revendication précédente **caractérisé en ce qu'**une deuxième extrémité de la lumière (30) proche du fond (5) est de largeur supérieure au diamètre de la première extrémité (44) de la lumière (30).

3. Maître-cylindre selon l'une des revendications précédentes **caractérisé en ce que** ledit piston est obtenu par moulage.

4. Maître-cylindre selon la revendication précédente **caractérisé en ce que** le piston est réalisé par moulage de matière plastique.

5. Maître-cylindre selon la revendication précédente **caractérisé en ce que** le piston est réalisé par moulage de matière phénolique.

6. Maître-cylindre selon la revendication 3 **caractérisé en ce que** le piston est réalisé par moulage d'un alliage d'aluminium.

7. Maître-cylindre selon l'une des revendications précédentes **caractérisé en ce que** l'obturateur (22) est amené en contact du siège de clapet (20) au moyen d'un ressort (38) monté en compression dans un logement dans lequel débouche le passage (36) entre l'obturateur et une capuche montée à force dans le logement.

8. Maître-cylindre selon l'une des revendications précédentes **caractérisé en ce que** le maître-cylindre est un maître-cylindre tandem comportant un piston primaire et un piston secondaire.

9. Maître-cylindre selon l'une des revendications précédentes **caractérisé en ce qu'**il comporte des ressorts de rappel primaire (9) et secondaire (11) respectivement des pistons primaire et secondaire et **en ce que** le ressort primaire est monté dans une cage déterminant la charge du ressort, ladite cage étant en appui contre le piston primaire et le piston secondaire.

## Claims

1. Master cylinder comprising a body (2) in which is made a bore (3) blocked off at one end by an end wall (5), at least one piston (8, 10) slideably mounted in a sealed manner in the bore, a hydraulic fluid supply chamber formed in a longitudinal slot (30) in the piston, a working chamber connected to brakes, said working chamber being connected to the supply chamber through a passage (36) made in the piston (8, 10), a valve intended to block off said passage (36) during a braking phase, said valve (18) comprising a shutter (22) and a valve seat (20) borne by the piston (8, 10), said shutter (22) bearing at rest against a bearing element (42) fixedly mounted in the body (3) of the master cylinder, said bearing element being mounted to pass through the longitudinal slot (30), the distance separating a first end (44) of the slot remote from the valve (20) and a first end (46) of the bearing element remote from the end wall (5) being less than a distance separating a first end (34) of the piston close to the end wall (5) and the end wall (5), the bearing element being a pin, **characterized in that** the first end (44) of the slot (30) is in the form of a circular arc and **in that** the circular arc has a diameter which is substantially equal to the diameter of the pin so as to achieve uniform distribution of the stresses applied by the pin to the piston (8, 10).

2. Master cylinder according to the preceding claim, **characterized in that** a second end of the slot (30) close to the end wall (5) has a width which is greater than the diameter of the first end (44) of the slot (30).

3. Master cylinder according to either of the preceding claims, **characterized in that** said piston is obtained by molding.

4. Master cylinder according to the preceding claim, **characterized in that** the piston is produced by molding plastic.

5. Master cylinder according to the preceding claim, **characterized in that** the piston is produced by molding phenolic material.

6. Master cylinder according to Claim 3, **characterized in that** the piston is produced by molding an aluminum alloy.

7. Master cylinder according to one of the preceding claims, **characterized in that** the shutter (22) is brought into contact with the valve seat (20) by means of a spring (38) mounted in compression in a housing into which opens the passage (36) between the shutter and a cap force-fitted in the housing.

8. Master cylinder according to one of the preceding claims, **characterized in that** the master cylinder is a tandem master cylinder comprising a primary piston and a secondary piston.

9. Master cylinder according to one of the preceding claims, **characterized in that** it comprises primary (9) and secondary (11) return springs belonging respectively to the primary and secondary pistons, and **in that** the primary spring is mounted in a cage determining the load of the spring, said cage bearing against the primary piston and the secondary piston.

## Patentansprüche

1. Hauptzylinder mit einem Körper (2), in dem eine Bohrung (3) ausgebildet ist, die an einem Ende durch einen Boden (5) verschlossen ist, mindestens einem Kolben (8, 10), der in dichter Weise gleitend in der Bohrung angebracht ist, einer Kammer zur Versorgung mit Hydraulikfluid, die in einer Längsöffnung (30) des Kolbens gebildet ist, einer mit Bremsen verbundenen Arbeitskammer, wobei die Arbeitskammer durch einen im Kolben (8, 10) ausgebildeten Durchgang (36) mit der Versorgungskammer verbunden ist, einem Ventilelement, das bei einer Bremsphase den Durchgang (36) verschließen soll, wobei das Ventilelement (18) einen Verschluss (22) und einen von dem Kolben (8, 10) getragenen Ventilelementsitz (20) aufweist, wobei der Verschluss (22) in der Ruheposition an einem Anlageelement (42) anliegt, das im Körper (2) des Hauptzylinders fest angebracht ist, wobei das Anlageelement so angebracht ist, dass es die Längsöffnung (30) durchquert, wobei der Abstand zwischen einem ersten, von dem Ventilelement (20) beabstandeten Ende (44) der Öffnung und einem ersten, von dem Boden (5) beabstandeten Ende (46) des Anlageelements kleiner ist als ein Abstand zwischen einem ersten Ende (34) des Kolbens, das sich nahe dem Boden (5) befindet, und dem Boden (5), wobei das Anlageelement ein Stift ist, **dadurch gekennzeichnet, dass** das erste Ende (44) der Öffnung (30) kreisbogenförmig ist und dass der Kreisbogen einen Durchmesser besitzt, der im Wesentlichen dem Durchmesser des Stifts entspricht, so dass eine gleichmäßige Verteilung der durch den Stift auf den Kolben (8, 10) ausgeübten Spannungen gewährleistet ist.

2. Hauptzylinder nach dem vorhergehenden Anspruch, **dadurch gekennzeichnet, dass** ein zweites Ende der Öffnung (30), das sich nahe dem Boden (5) befindet, eine Breite besitzt, die größer ist als der Durchmesser des ersten Endes (44) der Öffnung (30).

3. Hauptzylinder nach einem der vorhergehenden Ansprüche, **dadurch gekennzeichnet, dass** der Kolben durch Formen erhalten wird.

4. Hauptzylinder nach dem vorhergehenden Anspruch, **dadurch gekennzeichnet, dass** der Kolben durch Formen von Kunststoffinaterial gebildet ist.

5. Hauptzylinder nach dem vorhergehenden Anspruch, **dadurch gekennzeichnet, dass** der Kolben durch Formen von Phenolmaterial gebildet ist.

6. Hauptzylinder nach Anspruch 3, **dadurch gekennzeichnet, dass** der Kolben durch Formen einer Aluminiumlegierung gebildet ist.

7. Hauptzylinder nach einem der vorhergehenden Ansprüche, **dadurch gekennzeichnet, dass** der Verschluss (22) mittels einer Feder (38) mit dem Ventilelementsitz (20) in Berührung gelangt, wobei die Feder mit Druck in einer Aufnahme, in die der Durchgang (36) mündet, zwischen dem Verschluss und einer mit Kraft in der Aufnahme angebrachten Abdeckkappe angebracht ist.

8. Hauptzylinder nach einem der vorhergehenden Ansprüche, **dadurch gekennzeichnet, dass** der Hauptzylinder ein Tandemhauptzylinder mit einem Primärkolben und einem Sekundärkolben ist.

9. Hauptzylinder nach einem der vorhergehenden Ansprüche, **dadurch gekennzeichnet, dass** er eine Primärfeder (9) und eine Sekundärfeder (11) zum Zurückstellen des Primärkolbens bzw. des Sekundärkolbens aufweist und dass die Primärfeder in einem Halter angebracht ist, der die Belastung der Feder bestimmt, wobei der Halter am Primärkolben und am Sekundärkolben anliegt.
